# EUROPÄISCHE PATENTSCHRIFT

(11) **EP 2 596 939 B1**
(45) Veröffentlichungstag und Bekanntmachung des Hinweises auf die Patenterteilung: **04.09.2019**
(21) Anmeldenummer: 12193988.8
(22) Anmeldetag: 23.11.2012
(51) Int. Cl.: B29C 51/10, B29C 44/14, B29C 44/56, B29C 70/08, B29C 51/26, B29L 9/00

(54) **Thermoformverfahren zur Herstellung eines mehrere Schichten aufweisenden Formteils**
Thermoforming method for producing a moulded part comprising several layers
Procédé de thermoformage pour la fabrication d'une pièce de formage comprenant plusieurs couches

(30) Priorität: 24.11.2011 AT 17412011
(43) Veröffentlichungstag der Anmeldung: 29.05.2013
(73) Patentinhaber: Haidlmair Holding GmbH, 4542 Nussbach (AT)
(72) Erfinder: Breuer, Gerold, 4210 Unterweitersdorf (AT); Windhager, Willibald, 4591 Molln (AT); Krumphuber, Siegfried, 4550 Kremsmünster (AT); Hofstätter, Thomas, 4020 Linz (AT); Kloimstein, Karl, 4600 Wels (AT)
(74) Vertreter: Jell, Friedrich

(56) Entgegenhaltungen:
- EP-A1- 0 480 456
- DE-A1-102005 040 497
- DE-A1-102007 004 697
- DE-T2- 69 217 179
- US-A- 5 795 526
- US-A1- 2004 094 986
- US-A1- 2006 061 003

## Beschreibung

Die Erfindung betrifft ein Thermoformverfahren zur Herstellung eines mehrere Schichten aufweisenden Formteils, bei dem in ein offenes Formpresswerkzeug wenigstens eine Deckschicht, aufweisend einen Kunststoffwerkstoff, insbesondere Polypropylen, und zur Ausbildung mindestens einer Schaumschicht ein nach seiner Schaumextrusion wenigstens bereichsweise nicht unter seine Kristallisationstemperatur abgekühltes Polypropylen eingebracht wird und in einem weiteren Schritt das Formpresswerkzeug zum Verschweißen wenigstens dieser beiden Schichten geschlossen und nach einer Abkühlung der Schichten das Formteil dem Formpresswerkzeug entnommen wird, wobei zur wenigstens teilweisen Ausbildung der Deckschicht wenigstens eine Folie in das Formpresswerkzeug eingebracht und wenigstens teilweise an eine Formfläche des Formpresswerkzeugs angezogen wird.

Um ein mehrere Schichten aufweisendes Kunststoffformteil herzustellen, ist es aus dem Stand der Technik bekannt (AT008899U1), Werkzeugteile eines Formpresswerkzeugs voneinander getrennt und auf Prozesstemperatur erwärmt mit einem eine Oberflächenschicht bildenden Kunststoffwerkstoff mäanderförmig zu beschichten. Anschließend wird frei expandiertes und noch nicht unter seine Kristallisationstemperatur abgekühltes Polypropylen zur Ausbildung einer Schaumschicht eingebracht und die Werkzeugteile zusammengefügt, wobei die Schichten miteinander verschmelzen. Derartige Verfahren ermöglichen zwar eine Herstellung von mehrschichtigen, eine Schaumschicht aufweisenden Formteilen, nachteilig ist jedoch der vergleichsweise hohe Verfahrensaufwand, insbesondere die Herstellung der Deckschicht. Des Weiteren sind das Beschichten der Werkzeugteile und auch das Aufbringen der weiteren Kunststoffkomponente aufgrund der dazu erforderlichen - eventuell auch mehrachsigen - Lageveränderung von Werkzeugteilen und/oder der Extruder vergleichsweise aufwendig.

Des Weiteren ist es aus dem Stand der Technik bekannt (DE102007004697A1), ein mehrlagiges Bauteil mit einer Folie als Deckschicht und einer Schaumschicht auszubilden. Zu diesem Zweck wird an ein Oberwerkzeug eine Folie angezogen gehalten und eine Schaumschicht in das Unterwerkzeug eingebracht. Durch das geschlossene Werkzeug bildet sich der Schichtverbund zwischen Folie und Schaumschicht aus. Die Schaumschicht kann auch in das offene Werkzeug eingebracht werden. Nachteilig erfordert die Reaktionsgeschwindigkeit des Schaums die Einhaltung enger Verfahrensparameter, wodurch keine reproduzierbare Herstellung eines mehrlagigen Bauteils mit standfester Verbindung zwischen Deckschicht und Schaumschicht gewährleistet werden kann.

DE6921717T offenbart ein Verfahren zum Herstellen eines mehrschichtigen Formteils, wobei ein Hautmaterial zwischen eine Oberfläche einer oberen Form und einer Oberfläche einer unteren Form eingebracht wird. Eine geschmolzene Polypropylenmasse wird direkt auf die Oberfläche der unteren Form eingespeist.

Die Erfindung hat sich daher die Aufgabe gestellt, das Verfahren zur Herstellung eines mehrere Schichten aufweisenden Formteils zu verbessern und dessen Ablauf zu vereinfachen bzw. zu beschleunigen. Zudem soll mithilfe des erfindungsgemäßen Verfahrens eine konstruktiv einfache Vorrichtung ermöglicht werden, um in weiterer Folge eine zusätzliche Reduktion der Herstellungskosten eines Formteils zu erreichen.

Die Erfindung löst die gestellte Aufgabe durch die Merkmale des Anspruchs 1.

Wird auf mindestens eine Folie das warme Polypropylen aufgebracht und durch das Schließen des Formwerkzeugs entsprechend dem Verlauf der angezogenen Folie sowohl formgepresst, als auch mit der Folie verschweißt, so kann damit die Herstellung eines mehrschichtigen Formteils erheblich vereinfacht werden. Einerseits kann nämlich in einem Verfahrensschritt der - vorzugsweise frei - expandierte Polypropylenschaum in seine gewünschte Form gebracht und andererseits dieser Schaum auch mit der Folie fest verbunden werden. Letzteres kann durch das Aufbringen des warmen Polypropylens auf die Folie sichergestellt werden, weil dadurch eventuelle Nachteile im Zuge eines Aushärtungsprozesses des Schaums vor dessen Verbinden mit einer Folie vermeidbar sind. Gegenüber dem Stand der Technik können sich daher die Prozessparameter im Verfahren entspannt, was zu einer deutlichen Handhabungsvereinfachung führen kann. Zudem kann aufgrund einer bereits vor dem eigentlichen Formgebungsschritt durch die Werkzeuge bestehende Kontaktfläche mit einer erheblich verbesserten formschlüssigen Verbindung gerechnet werden. Außerdem kann es dadurch ermöglicht werden, aufzubringendes Polypropylen bereits zumindest teilweise entsprechend den Erfordernissen zur Herstellung des Formteils - beispielsweise hinsichtlich seiner Abmessungen - vorzufertigen, was zur Vereinfachung des erfindungsgemäßen Verfahren besonders beiträgt.

Wird zur wenigsten teilweisen Ausbildung der Deckschicht wenigstens eine Folie in das Formpresswerkzeug eingebracht und mindestens eine Folie wenigstens teilweise an eine Formfläche des Formpresswerkzeugs angezogen, kann eine Folie rasch und mit geringem Handhabungsaufwand in eine gewünschte Form gebracht werden, auch wenn diese Formgebung zu keiner plastischen Formbeständigkeit der Folie führt. Diese, in weiterer Folge des erfindungsgemäßen Verfahrens die Deckschicht des Formteils ausbildende Folie, kann somit formgenau aufgrund einer wenigstens teilweise der Formfläche bzw. Kontur des Formpresswerkzeugs entsprechenden Erstreckung für weitere Verfahrensschritte vorbereitet werden. Das Verfahren kann daher unter anderem auch den Vorteil bieten, in ihren Materialien, Abmessungen und/oder in ihrer Beschaffenheit unterschiedliche Folien für formgenaue Formteile zu verarbeiten. Außerdem kann dadurch beispielsweise ein aufwendiges und zeitintensives mäanderförmiges Auftragen von Kunststoff auf ein Formwerkzeug zur Erzeugung einer Deckschicht aus Kunststoff vermieden werden. Das erfindungsgemäße Verfahren kann sich somit nicht nur hinsichtlich seiner Einfachheit, sondern auch seiner flexiblen Verwendbarkeit auszeichnen.

Wird die Folie vor seinem Anziehen an das Formpresswerkzeug wenigstens teilweise, insbesondere auf eine Temperatur zwischen Kristallisations- oder Erstarrungstemperatur und Schmelztemperatur, erwärmt, kann die Folie aufgrund der dadurch erreichten Materialeigenschaften plastisch verformt und in Ihrer Form dem Verlauf des Formwerkzeugs angepasst werden. Beim erfindungsgemäßen Verfahren konnte sich eine Erwärmung einer Folie durch Infrarotbestrahlung als besonders vorteilhaft auszeichnen. Vorstellbar sind aber auch andere Verfahren der Erwärmung, beispielsweise mithilfe von Heißluft.

Erwärmt die Restwärme des schaumextrudierten Polypropylens wenigstens eine Folie zumindest bereichsweise über ihre Schmelztemperatur, kann auf einfache Weise ein Verschweißen von Folie und Schaumschicht erfolgen und zwar selbst dann, wenn während dem Verschweißen die Temperatur einer an ein Formwerkzeug angezogenen Folie unter ihrer Schmelztemperatur liegt. Letzteres kann sich insbesondere zur Vermeidung eines Reißens der angezogenen Folie als Vorteil erweisen.

Wird wenigstens eine Folie wenigstens bereichsweise mit Hilfe von Unterdruck an die Formfläche des Formwerkzeugs angezogen, kann diese Folie der Kontur des Formwerkzeugs besonders vorteilhaft folgen und damit an diese angepasst werden. Somit kann mithilfe des erfindungsgemäßen Verfahrens auf einfache Weise sichergestellt werden, dass die Folie an der Formfläche des Formpresswerkzeugs wenigstens bereichsweise schlüssig anliegt, wodurch in weiterer Folge die Beschaffenheit des herzustellenden Formteils - insbesondere auch hinsichtlich einer gleichmäßigen Dicke und/oder einer planen Oberfläche der aus der Folie gebildeten Deckschicht eines Formteils - verbessert wird.

Um besonders komplexe Konturen zu schaffen, kann vorgesehen sein, dass mehrere Folien wenigstens teilweise an je eine Formfläche des Formpresswerkzeugs angezogen werden. Das erfindungsgemäße Verfahren kann dadurch besonders vielseitigen Anforderungen gerecht werden.

Wird das Formpresswerkzeug wenigstens teilweise erwärmt, kann die Temperatur einer an ein Formpresswerkzeug angezogenen Folie zumindest teilweise - insbesondere an ihrer nicht an das Formpresswerkzeug anliegenden Seite - vereinfacht über ihrer Kristallisationstemperatur gehalten werden. Somit kann das Verfahren hinsichtlich einer Formgebung einer Folie erleichtert werden, zusätzlich ist dies auch ein wesentlicher Vorteil für eine folgende Verschweißung einer Folie - beispielsweise mit einer Schaumschicht. Beim erfindungsgemäßen Verfahren konnte sich dazu eine Erwärmung des Formpresswerkzeugs auf Temperaturen unter 95 Grad Celsius als ausreichend erweisen.

Als vorteilhaft kann sich herausstellen, wenn Polypropylen auf eine Breite expandiert wird, die größer gleich der Breite des angezogenen Folienanteils ist und dieser Überschuss an Schaumschicht im Zuge des Formpressens an die Folie angepresst wird, um eine eventuelle Bildung von Hohlräumen im Formteil zu verringern.

Besteht wenigstens eine Folie aus einem langkettenverzweigten Polypropylen, insbesondere aus HMS-PP (hochschmelzfestem Polypropylen), kann sich das erfindungsgemäße Verfahren hinsichtlich seiner Handhabungsfreundlichkeit besonders auszeichnen. HMS-Polypropylen weist ein vergleichsweise großes Temperaturfenster zwischen Schmelz- und Kristallisationstemperatur auf, somit kann die für eine thermoplastische Verformung erforderliche Temperatur vereinfacht eingestellt werden. Somit kann sich auch eine längere Zeitspanne, in der eine erwärmte Folie bearbeitet - insbesondere thermoplastisch verformt - werden kann, ergeben, da bei dieser Folie dazu ein größerer Temperaturabfall in Kauf genommen werden kann. Vorzugsweise bestehen alle Folien aus einem langkettenverzweigten Polypropylen, insbesondere aus HMS-PP (hochschmelzfestem Polypropylen), um damit das Verfahren besonders standfest zu machen.

Um ein Formteil mit bestimmten optischen und/oder haptischen Eigenschaften herzustellen, kann vorgesehen sein, dass wenigstens eine Folie ein Textilmaterial aufweist. Es ist vorstellbar, dass das Textilmaterial auf der Folie aufkaschiert ist. Vorzugsweise wird die Schaumschicht mit der dem Textilmaterial gegenüberliegenden Seite der Folie verbunden.

Die Herstellung eines Formteils kann insbesondere dann erleichtert bzw. in weiterer Folge auch die Standfestigkeit eines Formteils verbessert werden, wenn die Folie eine Kleberschicht oder eine Ethylen-Vinylalkohol-Copolymer-Schicht aufweist, da somit ein Verschweißen mit der Schaumschicht erleichtert bzw. eine besonders gute Verbindung der Schichten eines Formteils sichergestellt werden kann.

Wird die Schaumschicht aus expandierendem langkettenverzweigtem Polypropylen, insbesondere aus HMS-PP (hochschmelzfestem Polypropylen), erzeugt, können die Vorteile eines großen Temperaturfensters zwischen Schmelz- und Kristallisationstemperatur in gleicher Weise genutzt werden. Zudem kann sich HMS-Polypropylen durch seine vergleichsweise hohe Schmelzefestigkeit auszeichnen, wodurch nachteilige Eigenschaften wie beispielsweise ein Durchhängen verringert und die Handhabbarkeit einer über die Schmelztemperatur erwärmten Schaumschicht verbessert werden.

Wird die Schaumschicht mittig auf eine im Vergleich zu seinen Randbereichen höheren Dicke expandiert, kann ein Formpressen durch die größere Menge des zur Verfügung stehenden Schaums mit erhöhtem Verteilungsdruck erfolgen, wodurch in weiterer Folge eine besonders gute Ausfüllung des Formteils durch eine Schaumschicht erreicht werden kann.

Wird beim Formpressen der Schaumschicht zwischen der Folie und der Schaumschicht Unterdruck eingebracht, kann ein besonders schlüssiges Verschweißen von Folie und Schaumschicht erfolgen. Zudem kann die Gefahr der Ausbildung von Hohlräumen, die sich unter anderem nachteilig auf die Stabilität des Formteils auswirken können, reduziert werden. Des Weiteren ist es auf diese Weise möglich, den für das Formpressen der Schaumschicht aufzuwendenden Druck zu verringern, was zu einer schonenden Verarbeitung des Formteils beitragen kann.

Zur Reduktion von unerwünschten Hohlräumen zwischen der Folie und der Schaumschicht kann das Formpresswerkzeug in einer Unterdruck aufweisenden Umgebung geschlossen werden. Vorstellbar ist hierzu beispielsweise eine unter Vakuum stehende Kammer. Ansammlungen von Luft beispielsweise zwischen Folie und Schaumschicht können so aus dem Formteil entfernt werden, bevor Schaum und Folie verschweißen und diese Luft zwischen den Materialien eingeschlossen wird. Somit können ein besonders stabiles Formteil und in weiterer Folge auch ein besonders reproduzierbares Verfahren geschaffen werden.

Wird zur wenigstens teilweisen Umfassung zwischen zwei Folien eine Schaumschicht eingebracht, kann auf einfache Weise ein Verfahren zur Herstellung eines Formteils mit einer geschlossenen Oberfläche geschaffen werden.

Als besonders einfach und somit kostengünstig kann sich ein Thermoformverfahren herausstellen, wenn ein, die Schaumschicht ausbildendes Polypropylen frei expandierend erzeugt wird.

Das erfindungsgemäße Thermoformverfahren kann sich insbesondere dazu auszeichnen, ein Formteil mit mehreren Schichten, von denen wenigstens eine Schicht als Schaumschicht ausgebildet ist, herzustellen.

In den Figuren ist das erfindungsgemäße Verfahren anhand von Ausführungsbeispielen beispielsweise dargestellt. Es zeigen
- Fig. 1: eine Vorrichtung zur Durchführung des erfindungsgemäßen Verfahrens,
- Fig. 2a, 2b, 2c, 2d: diverse Verfahrensschritte,
- Fig. 3 und 4: zwei alternative Verfahrensschritte,
- Fig. 5: ein durch das erfindungsgemäße Verfahren hergestelltes Formteil,
- Fig. 6: eine aufgerissene Detailansicht der Fig. 2d und
- Fig. 7: eine abgerissene Darstellung eines in eine Vakuumkammer eingebrachten Formpresswerkzeugs.

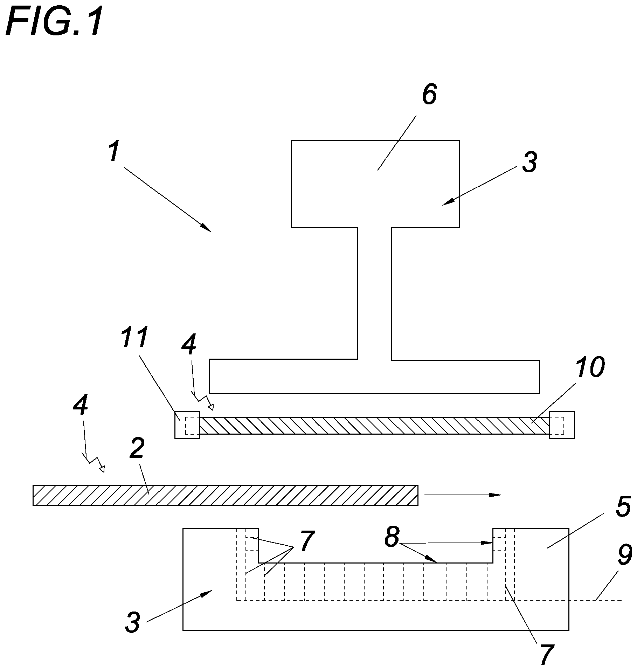

In Fig. 1 ist beispielsweise eine Vorrichtung 1 zur Durchführung des erfindungsgemäßen Verfahrens dargestellt. Hier wird eine Folie aus HMS-Polypropylen 2 verwendet, die vor dem Aufbringen auf das Formpresswerkzeug 3 mit Infrarot 4 bestrahlt wird, bis die Folie 2 eine Temperatur zwischen ihrer Kristallisations- und Schmelztemperatur erreicht und somit verformbar ist. Das Formpresswerkzeug 3 weist ein Thermoformwerkzeug 5 und eine Presse 6 auf, wobei das Thermoformwerkzeug 5 von Kanälen 7 durchzogen ist, die dem Absaugen von Luft bzw. dem damit einhergehenden Anziehen der Folie 2 an die Formfläche 8 dienen, um zwischen Folie 2 und Formpresswerkzeug 3 Unterdruck zu erzeugen. Die dazu verwendete, über eine Unterdruckleitung 9 an das Thermoformwerkzeug 5 angeschlossene Vakuumpumpe ist in den Figuren nicht weiter dargestellt. Des Weiteren kann der Fig. 1 eine zweite aus HMS-Polypropylen bestehende Folie 10 entnommen werden, die über einen Rahmen 11 aufgespannt ebenso einer Weiterverarbeitung durch die Vorrichtung 1 unterworfen werden kann. Diese Folie 10 kann im Verfahren ebenso mithilfe von Infrarot 4 erwärmt werden.

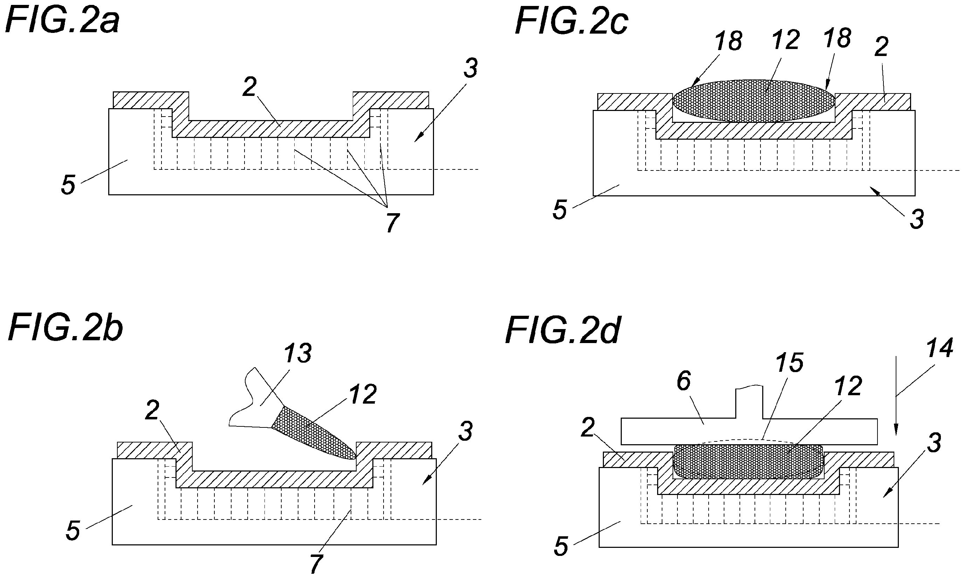

Wie in Fig. 2a ersichtlich, wird die über ihre Kristallisationstemperatur erwärmte und somit verformbare Folie 2 mithilfe von Unterdruck an die Formfläche 8 des Thermoformwerkzeugs 5 bereichsweise angezogen, nachdem diese in das offene Formpresswerkzeug 3, wie in Fig. 1 dargestellt, eingebracht wurde. Damit erreicht man auf einfache Verfahrensweise eine der Kontur des Formpresswerkzeugs 3 entsprechende Formgebung der Folie 1, die nicht zwangsweise eine plastische Formgebung darstellen muss.

Es liegt jedoch im Rahmen der Erfindung, auch die Folie 10 an die Presse 6 anzuziehen bzw. diese Folie 10 - gleichwie in Fig. 1 für Folie 3 dargestellt - in ein Thermoformwerkzeug einzubringen und an dieses Thermoformwerkzeug anzuziehen. Dieses nicht dargestellte Thermoformwerkzeug kann in weiterer Folge die Funktion der dargestellten Presse übernehmen, um damit das erfindungsgemäße Verfahren weiter durchzuführen.

Fig. 2b zeigt schematisch ein Aufbringen von warmem Polypropylen, insbesondere HMS-PP, auf die Folie 2. Das Polypropylen weist aufgrund seiner Schaumextrusion wenigstens bereichsweise eine Temperatur über seiner Kristallisationstemperatur auf. Eine zusätzliche Erwärmung des Polypropylens ist jedoch vorstellbar. Mit dem vorzugsweise frei expandierten Polypropylen wird eine Schaumschicht 12 ausgeformt, wobei sich für das freie Expandieren ein Breitschlitzwerkzeug 13 als besonders vorteilhaft herausgestellt hat. Ebenso vorstellbar ist, diese Schaumschicht 12 außerhalb des Formpresswerkzeugs 3 vorzufertigen und etwa mithilfe eines Roboters im noch warmen Zustand auf die Folie 2 aufzubringen, was in den Figuren nicht dargestellt wird.

Die Fig. 2c zeigt die Schaumschicht 12, die im Vergleich zu seinen Randbereichen 18 mittig auf eine höhere Dicke expandiert wurde.

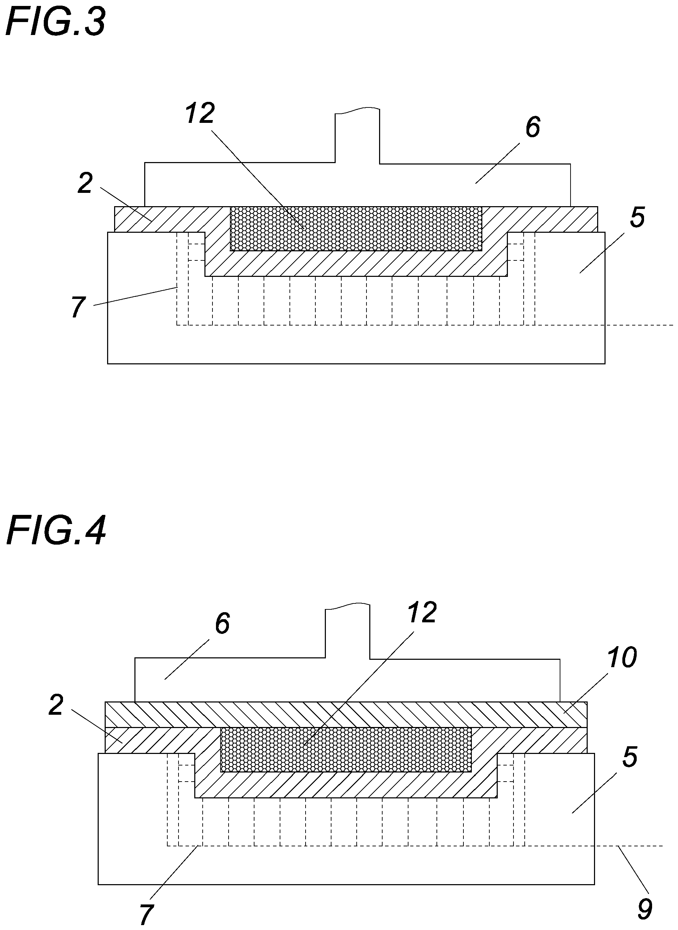

Wie in Fig. 2d näher dargestellt, wird durch das Schließen des Formwerkzeugs 3, indem die Presse 6 gegenüber dem Thermoformwerkzeug 5 in eine Schließbewegung 14 versetzt wird, die Schaumschicht 12 entsprechend dem Verlauf der angezogenen Folie 2 sowohl formgepresst (seine Kontur 15 verändert sich), als auch mit der Folie 2 gleichzeitig verschweißt. Dieses Verschweißen erfolgt besonders vorteilhaft dadurch, dass die Restwärme des expandierten Polypropylens bzw. der daraus entstehenden Schaumschicht 12 die Folie 2 zumindest bereichsweise über ihre Schmelztemperatur erwärmt. Wie zudem dargestellt, wird im Zuge des Formpressens die ursprüngliche Kontur 15 der vorzugsweise frei expandierten Schaumschicht 12 verändert und Material des Schaums 12 in Richtung Ecken der an das Formwerkzeug angezogenen Folie verdrängt, wodurch diese verbessert ausgefüllt werden. Dies ist insbesondere in der Fig. 3 zu entnehmen. Die Folie 2 bildet somit nur einen Teil der Deckschicht 16 des nicht näher dargestellten Formteils 17 aus.

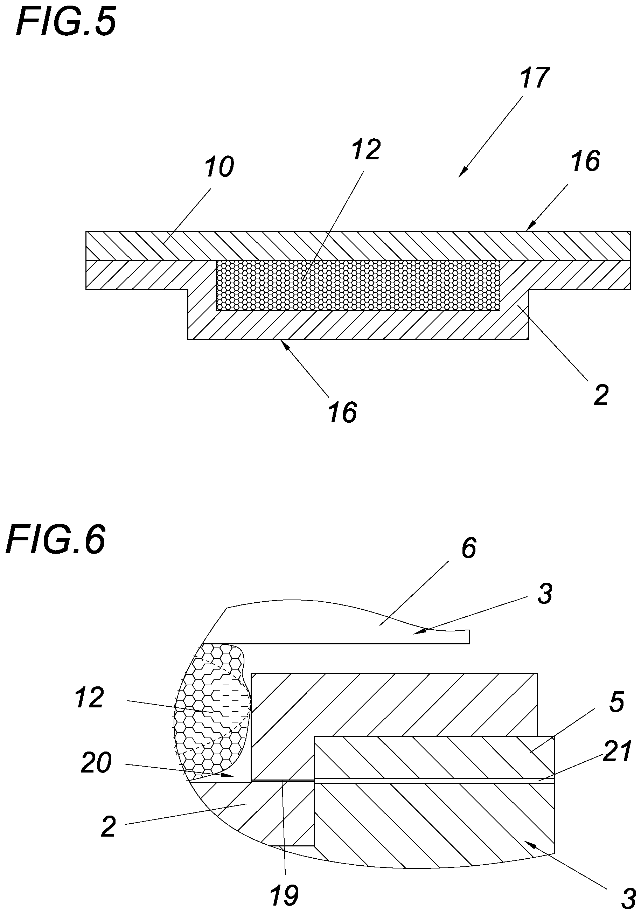

Alternativ entsprechend Fig. 4 kann die Schaumschicht 12 auch von zwei Folien 2 und 10 abgedeckt werden, um damit eine die Schaumschicht 12 verschließende Deckschicht 16 zu erzeugen. Ein derartig hergestelltes Formteil 17 mit einer Deckschicht 16 und einer Schaumschicht 12 kann der Fig. 5 entnommen werden.

Der Fig. 6 ist ein Verfahrensschritt zu entnehmen, durch den die Schaumschicht 12 an die von der Folie 2 vorgegebene Kontur verbessert angelegt bzw. angezogen werden kann. Hierzu wird beim Formpressen der Schaumschicht 12 zwischen der Folie 2 und der Schaumschicht 12 Unterdruck eingebracht, was auch für einen verbesserten Schweißverbund von Schaumschicht 12 und Folie 2 genutzt wird. Zu diesem Zweck wird die Folie 2 mit einer nicht näher dargestellten Nadel durchstochen. Es bildet sich eine Ansaugöffnung 19, über die Luft 20, die sich zwischen Schaumschicht 12 und der Folie 2 ansammeln kann, abgesaugt wird. Dafür wird ein mit der Ansaugöffnung 10 verbundener Saugkanal 21 mit Unterdruck einer nicht näher dargestellten Vakuumpumpe beaufschlagt. Es ist aber auch vorstellbar, für diesen Zweck die Unterdruckleitung 9 des Thermoformwerkzeugs 5 zu verwenden, wobei ein Durchstechen der Folie 2 sogar entfallen kann, wenn eine zumindest teil- oder bereichsweise gasdurchlässige Folie 2 verwendet wird.

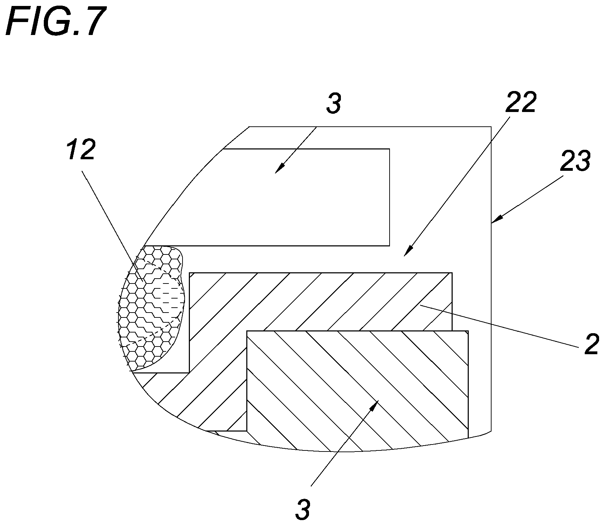

Alternativ zur Fig. 6 dargestellten Lösung oder auch zusätzlich zu dieser Lösung kann, wie in Fig. 7 dargestellt, zur Reduktion von unerwünschten Hohlräumen im Formteil 17 das Formpresswerkzeug 5 in einer Unterdruck aufweisenden Umgebung 22 geschlossen werden. Zu diesem Zweck wird konstruktiv einfach um das Formpresswerkzeug 3 eine Vakuumkammer 23 vorgesehen bzw. dieses Formpresswerkzeug 3 in solch eine Kammer 23 zum Schließen eingebracht. Eventuell sich zwischen den Schichten 12, 2 ansammelnde Luft kann so auf einfache Weise aus dem Formpresswerkzeug 5 abgezogen werden.

Im Allgemeinen wird weiter erwähnt, dass das Verfahren beschrieben für Folie 2 selbstverständlich auch für Folie 10 denkbar ist.

Vorteilhafte Verfahrensverhältnisse, insbesondere beim Verschweißen von Folie 2 bzw. 10 und Schaumschicht 12 stellen sich ein, wenn Folie 2 bzw. 10 und Schaumschicht 12 aus einem langkettenverzweigten Polypropylen, insbesondere aus HMS-PP, bestehen. Es ist aber auch vorstellbar, dass eine Folie 2 und/oder 10 ein Textilmaterial mit einer Kleberschicht oder eine Ethylen-Vinylalkohol-Copolymer-Schicht aufweisen, um damit ein Verschweißen mit der Schaumschicht 12 sicherzustellen, was nicht näher dargestellt worden ist.

## Patentansprüche

1. Thermoformverfahren zur Herstellung eines mehrere Schichten (12, 16) aufweisenden Formteils (17), bei dem in ein offenes Formpresswerkzeug (3) wenigstens eine Deckschicht (16), aufweisend einen Kunststoffwerkstoff, insbesondere Polypropylen, und zur Ausbildung mindestens einer Schaumschicht (12) ein nach seiner Schaumextrusion wenigstens bereichsweise nicht unter seine Kristallisationstemperatur abgekühltes Polypropylen eingebracht wird und in einem weiteren Schritt das Formpresswerkzeug (3) zum Verschweißen wenigstens dieser beiden Schichten (12, 16) geschlossen und nach einer Abkühlung der Schichten (12, 16) das Formteil (3) dem Formpresswerkzeug (3) entnommen wird, wobei zur wenigstens teilweisen Ausbildung der Deckschicht (16) wenigstens eine Folie (2, 10) in das Formpresswerkzeug (3) eingebracht und wenigstens teilweise an eine Formfläche (8) des Formpresswerkzeugs (3) angezogen wird, wobei auf mindestens eine Folie (2, 10) das warme Polypropylen aufgebracht und
durch das Schließen des Formwerkzeugs (3) entsprechend dem Verlauf der angezogenen Folie (2, 10) sowohl formgepresst, als auch mit der Folie (2, 10) verschweißt wird.

2. Thermoformverfahren nach Anspruch 1, **dadurch gekennzeichnet, dass** die Folie (2, 10) vor seinem Anziehen an das Formpresswerkzeug (3) wenigstens teilweise, insbesondere auf eine Temperatur zwischen Kristallisations- oder Erstarrungstemperatur und Schmelztemperatur, erwärmt wird.

3. Thermoformverfahren nach Anspruch 1 oder 2, **dadurch gekennzeichnet, dass** die Restwärme des schaumextrudierten Polypropylens wenigstens eine Folie (2, 10) zumindest bereichsweise über ihre Schmelztemperatur erwärmt.

4. Thermoformverfahren nach Anspruch 1, 2 oder 3, **dadurch gekennzeichnet, dass** wenigstens eine Folie (2, 10) wenigstens bereichsweise mit Hilfe von Unterdruck an die Formfläche (8) des Formwerkzeugs (3) angezogen wird.

5. Thermoformverfahren nach Anspruch 1 bis 4, **dadurch gekennzeichnet, dass** mehrere Folien (2, 10) wenigstens teilweise an je eine Formfläche (8) des Formpresswerkzeugs (3) angezogen werden.

6. Thermoformverfahren nach Anspruch 1 bis 5, **dadurch gekennzeichnet, dass** das Formpresswerkzeug (3) wenigstens teilweise erwärmt wird.

7. Thermoformverfahren nach einem der Ansprüche 1 bis 6, **dadurch gekennzeichnet, dass** Polypropylen auf eine Breite expandiert wird, die größer gleich der Breite des angezogenen Folienanteils ist.

8. Thermoformverfahren nach einem der Ansprüche 1 bis 7, **dadurch gekennzeichnet, dass** wenigstens eine Folie aus einem langkettenverzweigten Polypropylen, insbesondere aus HMS-PP, besteht.

9. Thermoformverfahren nach einem der Ansprüche 1 bis 7, **dadurch gekennzeichnet, dass** wenigstens eine Folie ein Textilmaterial aufweist.

10. Thermoformverfahren nach Anspruch 9, **dadurch gekennzeichnet, dass** die Folie eine Kleberschicht oder eine Ethylen-Vinylalkohol-Copolymer-Schicht aufweist.

11. Thermoformverfahren nach einem der Ansprüche 1 bis 10, **dadurch gekennzeichnet, dass** die Schaumschicht (12) aus expandierendem langkettenverzweigtem Polypropylen, insbesondere aus HMS-PP, erzeugt wird.

12. Thermoformverfahren nach einem der Ansprüche 1 bis 11, **dadurch gekennzeichnet, dass** die Schaumschicht (12) mittig auf eine im Vergleich zu seinen Randbereichen (18) höheren Dicke expandiert wird.

13. Thermoformverfahren nach einem der Ansprüche 1 bis 12, **dadurch gekennzeichnet, dass** beim Formpressen der Schaumschicht (12) zwischen der Folie (2, 10) und der Schaumschicht (12) Unterdruck eingebracht wird.

14. Thermoformverfahren nach einem der Ansprüche 1 bis 12, **dadurch gekennzeichnet, dass** das Formpresswerkzeug (3) in einer Unterdruck aufweisenden Umgebung geschlossen wird.

15. Thermoformverfahren nach einem der Ansprüche 1 bis 14, **dadurch gekennzeichnet, dass** zur wenigstens teilweisen Umfassung zwischen zwei Folien (2, 10) eine Schaumschicht (12) eingebracht wird.

16. Thermoformverfahren nach einem der Ansprüche 1 bis 15, **dadurch gekennzeichnet, dass** das die Schaumschicht ausbildende Polypropylen frei expandierend erzeugt wird.

## Claims

1. Thermoforming method for producing a moulded part (17) comprising multiple layers (12, 16), in which at least one cover layer (16), comprising a plastic material, more particularly polypropylene, and in order to form at least one foam layer (12) a polypropylene which, after foam extrusion thereof, is not cooled below its crystallization temperature at least in some regions, is introduced into an open compression mould (3) and in a further step the compression mould (3) is closed in order to weld at least said two layers (12, 16), and once the layers (12, 16) have cooled the moulded part (3) is removed from the compression mould (3), wherein, in order to at least partially form the cover layer (16), at least one film (2, 10) is introduced into the compression mould (3) and is at least partially pulled against a moulding surface (8) of the compression mould (3), wherein the hot polypropylene is applied to at least one film (2, 10) and, by closing the mould (3), the pulled film (2, 10) is both compression-moulded according to the profile and also is welded to the film (2, 10).

2. Thermoforming method according to claim 1, **characterized in that** the film (2, 10), before being pulled against the compression mould (3), is at least partially heated, more particularly to a temperature between the crystallization or solidification temperature and the melting temperature.

3. Thermoforming method according to claim 1 or 2, **characterized in that** the residual heat of the foam-extruded polypropylene heats at least one film (2, 10) above its melting temperature at least in some regions.

4. Thermoforming method according to claim 1, 2 or 3, **characterized in that** at least one film (2, 10) is pulled against the moulding surface (8) of the mould (3) at least in some regions by means of negative pressure.

5. Thermoforming method according to claims 1 to 4, **characterized in that** multiple films (2, 10) are pulled at least partially against a respective moulding surface (8) of the compression mould (3).

6. Thermoforming method according to claims 1 to 5, **characterized in that** the compression mould (3) is at least partially heated.

7. Thermoforming method according to one of claims 1 to 6, **characterized in that** polypropylene is expanded to a width that is greater than or equal to the width of the pulled film portion.

8. Thermoforming method according to one of claims 1 to 7, **characterized in that** at least one film is made of a long-chain branched polypropylene, more particularly of HMS-PP.

9. Thermoforming method according to one of claims 1 to 7, **characterized in that** at least one film comprises a textile material.

10. Thermoforming method according to claim 9, **characterized in that** the film has an adhesive layer or an ethylene-vinyl alcohol copolymer layer.

11. Thermoforming method according to one of claims 1 to 10, **characterized in that** the foam layer (12) is produced from expanding long-chain branched polypropylene, more particularly from HMS-PP.

12. Thermoforming method according to one of claims 1 to 11, **characterized in that** the foam layer (12) is expanded to a greater thickness in the middle than in the edge regions (18) thereof.

13. Thermoforming method according to one of claims 1 to 12, **characterized in that**, during the compression-moulding of the foam layer (12), a negative pressure is introduced between the film (2, 10) and the foam layer (12).

14. Thermoforming method according to one of claims 1 to 12, **characterized in that** the compression mould (3) is closed in an environment having a negative pressure.

15. Thermoforming method according to one of claims 1 to 14, **characterized in that** a foam layer (12) is introduced so as to be at least partially enclosed between two films (2, 10).

16. Thermoforming method according to one of claims 1 to 15, **characterized in that** the polypropylene forming the foam layer is produced in a freely expanding manner.

## Revendications

1. Procédé de thermoformage pour la fabrication d'une pièce moulée (17) comprenant plusieurs couches (12, 16), dans lequel au moins une couche de couverture (16) contenant un matériau synthétique, en particulier du polypropylène, et, pour former au moins une couche de mousse (12), un polypropylène qui n'est pas refroidi, au moins par zones, en dessous de sa température de cristallisation après son extrusion sous forme de mousse sont introduits dans un outil de moulage à la presse (3) ouvert et l'outil de moulage à la presse (3) est fermé dans une étape ultérieure pour souder au moins ces deux couches (12, 16) et, après refroidissement des couches (12, 16), la pièce moulée (3) est retirée de l'outil de moulage à la presse (3), dans lequel au moins un film (2, 10) est introduit dans l'outil de moulage à la presse (3) pour former au moins partiellement la couche de couverture (16) et au moins partiellement appliqué sur une surface de moulage (8) de l'outil de moulage à la presse (3), le polypropylène chaud étant appliqué sur au moins un film (2, 10) et moulé à la presse suivant la forme du film (2, 10) appliqué et soudé au film (2, 10) par la fermeture de l'outil de moulage à la presse (3).

2. Procédé de thermoformage selon la revendication 1, **caractérisé en ce que** le film (2, 10) est au moins partiellement chauffé avant d'être appliqué sur l'outil de moulage à la presse (3), en particulier à une température comprise entre sa température de cristallisation ou de solidification et sa température de fusion.

3. Procédé de thermoformage selon la revendication 1 ou 2, **caractérisé en ce que** la chaleur résiduelle du polypropylène extrudé sous forme de mousse chauffe au moins un film (2, 10) au moins par zones au-dessus de sa température de fusion.

4. Procédé de thermoformage selon la revendication 1, 2 ou 3, **caractérisé en ce qu'**au moins un film (2, 10) est au moins en partie appliqué sur la surface de moulage (8) de l'outil de moulage à la presse (3) à l'aide d'une dépression.

5. Procédé de thermoformage selon les revendications 1 à 4, **caractérisé en ce que** plusieurs film (2, 10) sont appliqués au moins en partie chacun sur une surface de moulage (8) de l'outil de moulage à la presse (3).

6. Procédé de thermoformage selon la revendication 1 à 5, **caractérisé en ce que** l'outil de moulage à la presse (3) est au moins partiellement chauffé.

7. Procédé de thermoformage selon l'une des revendications 1 à 6, **caractérisé en ce que** du polypropylène est expansé jusqu'à une largeur égale ou supérieure à la largeur du composant en film appliqué.

8. Procédé de thermoformage selon l'une des revendications 1 à 7, **caractérisé en ce qu'**au moins un film se compose d'un polypropylène ramifié à chaînes longues, en particulier de HMS-PP.

9. Procédé de thermoformage selon l'une des revendications 1 à 7, **caractérisé en ce qu'**au moins un film contient une matière textile.

10. Procédé de thermoformage selon la revendication 9, **caractérisé en ce que** le film présente une couche d'adhésif ou une couche de copolymère d'éthylène et d'alcool vinylique.

11. Procédé de thermoformage selon l'une des revendications 1 à 10, **caractérisé en ce que** la couche de mousse (12) se compose d'un polypropylène ramifié à chaînes longues expansé, en particulier de HMS-PP.

12. Procédé de thermoformage selon l'une des revendications 1 à 11, **caractérisé en ce que** le milieu de la couche de mousse (12) est expansé jusqu'à une plus grande épaisseur que ses bords (18).

13. Procédé de thermoformage selon l'une des revendications 1 à 12, **caractérisé en ce que** lors du moulage à la presse de la couche de mousse (12), une dépression est créée entre le film (2, 10) et la couche de mousse (12).

14. Procédé de thermoformage selon l'une des revendications 1 à 12, **caractérisé en ce que** l'outil de moulage à la presse (3) est fermé dans un environnement présentant une dépression.

15. Procédé de thermoformage selon l'une des revendications 1 à 14, **caractérisé en ce qu'**une couche de mousse (12) est introduite de façon à être entourée au moins partiellement entre deux films (2, 10).

16. Procédé de thermoformage selon l'une des revendications 1 à 15, **caractérisé en ce que** le polypropylène formant la couche de mousse est produit en expansion libre.
